# NEUE EUROPÄISCHE PATENTSCHRIFT

(11) **EP 0 071 828 B2**
(45) Veröffentlichungstag und Bekanntmachung des Hinweises auf die Entscheidung über den Einspruch: **15.12.1993**
(45) Hinweis auf die Patenterteilung: 30.12.1986
(21) Anmeldenummer: 82106602.4
(22) Anmeldetag: 22.07.1982
(51) Int. Cl.: C08J 7/18, C08L 23/00, C08F 255/00

(54) **Verfahren zur Herstellung von Rohren aus durch Bestrahlen mit Elektronenstrahlen vernetzten Polyolefin-Formmassen**
Process for producing tubes of polyolefin moulding compositions cross-linked by irradiation with electron beams
Procédé de fabrication de tubes de matières à mouler à base de polyoléfines réticulés par des faisceaux électroniques

(30) Priorität: 12.08.1981 DE 3131812
(43) Veröffentlichungstag der Anmeldung: 16.02.1983
(73) Patentinhaber: Hewing GmbH & Co., D-48607 Ochtrup (DE)
(72) Erfinder: Hoffmann, Manfred, D-4434 Ochtrup (DE)
(74) Vertreter: Hoffmeister, Helmut, Dr. Dipl.-Phys.

(56) Entgegenhaltungen:
- EP-A- 0 064 832
- DE-A- 2 914 014
- DE-B- 2 602 689
- DE-B- 2 757 820
- DE-C- 1 116 394
- DE-C- 1 156 228
- DE-C- 2 841 828
- US-A- 3 387 065
- Forschungsbericht T 81-122, Juli 1981, Bundesministerium Forschung und Technologie
- Journal of Applied Polymer Science, Band 14, 1970, S. 1659-1670
- Informationstagung ETH Zürich, 23.09.1964 "Grundlagen und Anwendung der Strahlenchemie", S. 36-43
- Firmenschrift "Wacker VAE" der Wacker AG, April 1981
- Firmenschrift "Strahlentechnologie, RDI-Euro 103" der RDI Radiation Dynamics. INC. Division of Monsanto, Teil 1 Grundlagen

## Beschreibung

Die Erfindung bezieht sich auf ein Verfahren zur Herstellung von Rohren aus durch Bestrahlen mit Elektronenstrahlen vernetzbaren Polyolefin-Formassen, denen vor der Bestrahlung wenigstens eine Substanz zugegeben wird. die das Auftreten von unerwünschten Ansammlungen und Entladungen elektrischer Ladungskonzentrationen verhindern und das unerwünschte Aufschäumen von Polyolefin-Formlingen während des Bestrahlens unterdrücken soll. Die als Lichtenberg-Effekt bekannten Entladungen von Ladungskonzentrationen innerhalb von Rohren führen zu feinen Löchern in der Rohrwand.

Unter Polyolefinen werden Polymerisate von Olefin-Kohlenwasserstoffen verstanden, vor allem des Ethylens (Polyethylen, PE) und des Propylens (Polypropylen, PP), ferner des Isobutylens, Buten-(1), Pentens, Methylpentens und anderer, sowie Copolymerisate, z. B. Ethylen-Propylen-Copolymerisat.

Aus der DE-A-2 757 820 ist ein Verfahren bekannt, die nach der Bestrahlung zu beobachtenden Eigenschaften von Formlingen, die mit energiereichen Elektronen bestrahlt werden sollen. dadurch zu verbessern, daß den Formmassen vor der Bestrahlung eine damit mischbare Verbindung der allgemeinen Formel X-Ym beigefügt wird, worin bedeuten: X = einen keine Acetylen-Bindung enthaltenden Rest. Y = einen eine Acetylen-Bindung enthaltenden Rest und m = eine ganze Zahl von 1 oder darüber ; weiterhin wird als Wärmealterungsstabilisator eine Substanz mit der Bezeichnung Tetrakis-(methylen-(3,5-di-tert.-butyl-4-hydroxy-hydrocinnamat))-methan hinzugefügt. Als Substanz X-Ym werden acetylenische Verbindungen, beispielsweise Dipropargylmaleat (DPM), Dipropargylsuccinat (DPS) oder Diallylmaleat (DM) verwendet. Insbesondere wird das bekannte Verfahren dazu benutzt, Kabelummantelungen herzustellen.

Es hat sich gezeigt, daß die zu verwendenden acetylenischen Spezialchemikalien in der Bundesrepublik Deutschland praktisch nicht zu erhalten sind und daher importiert werden müssen. Die acetylenische Verbindung DPS hat derzeit einen Kilogramm-Preis von DM 200,-- und verteuert damit den Preis beispielsweise der Herstellung von strahlenvernetzten Polyethylen-Warmwasserrohren für Fußbodenheizungen derart, daß das Verfahren wirtschaftlich bei der Herstellung von Rohren nicht vertretbar ist.

Bei der Bestrahlung von Rohren aus Polyethylen zeigt sich erfahrungsgemäß, daß im gasgefüllten Innenraum des Rohres hohe Ladungskonzentrationen auftreten können, die zur Ausbildung von Lichtenberg'schen Kurzschlüssen, Durchschlägen und damit feinen Löchern in der Rohrwand führen. Es sind zur Abhilfe deshalb auch schon elektrische Drähte in den Innenraum der Rohre eingezogen worden, die quasi als «Blitzableiter» dienen (vgl. US-A-3 387 065). Dieses Einziehen von Drähten verteuert aber die Rohrherstellung ebenfalls deutlich, nicht zuletzt deswegen, weil die Drähte wieder entfernt werden müssen.

Es stellt sich demnach die Aufgabe, anstelle der bekannten beizumischenden Substanzen andere anzugeben, die ebenfalls die Entstehung bzw. Entladung von elektrischen Ladungskonzentrationen und das unerwünschte Aufschäumen verhindern, die jedoch in größeren Mengen leicht beziehbar sind und vom Preise her das Endprodukt nicht wesentlich verteuern.

Die Aufgabe wird dadurch gelöst, daß einer Polyolefin-Formmasse, die kein Triallylcyanurat enthält, Ethylen-Vinylacetat-Copolymer beigemischt wird, bis daß die Polyolefin-Formmasse einen Gehalt von 0,3-20 Gew.-% an Vinylacetat aufweist, und daß anschließend in bekannter Weise die erhaltene Mischung in die gewünschte Form gebracht und die gebildeten Rohre mit Elektronenstrahlen bestrahlt werden. Die Zusammensetzung von Vinylacetat (Essigsäure-Vinylester) is bekannt :

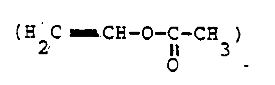

Soweit überprüfbar, weist die Mischung mit dem Copolymerisat gegenüber dem Ausgangspolyolefin eine erhöhte Dielektrizitätskonstante εᵣ und einen erhöhten dielektrischen Verlustfaktor tan δ auf.

Gemäß vorliegender Erfindung ist es nicht erforderlich, zwei zusätzliche Substanzen beizumischen, sondern es werden lediglich preiswerte Vinylacetat-Copolymerisate verwendet. Rohre aus PE-Formmassen, denen Vinylacetat gemäß Erfindung beigemischt ist, zeigen während des Bestrahlungsvorganges eine deutlich verringerte Ansammlung elektrischer Ladungen im Inneren gegenüber Rohren aus reinem PE. Die Ansammlung elektrischer Ladungen kann sogar weitgehend ausgeschaltet werden. Die Vernetzungsreaktion wird, wenn genügend Vinylacetat zugegeben wurde, bei gleicher Intensität der Bestrahlung erheblich begünstigt, d. h. bei geringerer Bestrahlungsdosis wird bereits eine ausreichende Vernetzung der Rohre erreicht. Durch diese geringere Strahlungsintensität werden der Wärmestau und das Aufschäumen ebenfalls praktisch unterdrückt. Vorteilhaft ist ferner, daß durch die geringere Bestrahlungsdosis auch geringere Mengen des üblicherweise bei Polyolefin-Formmassen zugesetzten Wärmealterungsstabilisators verbraucht werden ; auf diese Weise hergestellte Formlinge weisen eine sehr gute Wärmealterungsbeständigkeit, d. h. Beständigkeit gegen Thermooxidation, auf.

In diesem Zusammenhang beschreibt die DE-B-2 602 689 eine PE-Formmasse, welche aus einem Ethylen-Vinylacetat-Copolymerisat, einem polymeren Antioxidans sowie Schwefel als Wärmealterungsstabilisatoren und zusätzlich Triallylcyanurat (TAC), als ein die Vernetzungsausbeute erhöhendes mehrfunktionelles Monomer, besteht. Es hat sich gezeigt, daß beim Bestrahlen von Formlingen aus dieser Formmasse, bedingt durch die sehr gute Vernetzungsausbeute, d. h. bei vorgegebenem Vernetzungsgrad geringerer erforderlicher Bestrahlungsdosis, zwar ein Aufschäumen des Formlings, nicht jedoch eine Ladungsansammlung und Entladung unter Ausbildung Lichtenberg'scher Figuren verhindert werden kann. Es ist auch aus der Literatur bekannt, daß beim Bestrahlen von Formlingen aus mit TAC ausgerüsteten PE-Formmassen schon bei relativ geringen Bestrahlungsdosen Entladungen unter Ausbildung Lichtenberg'scher Figuren auftreten können.

Bei der Anwendung der aus DE-B-2 602 689 bekannten Substanz bestand keine Notwendigkeit, Ladungsansammlungen und Kurzschlüsse zu verhindern, da diese Substanzen als Isoliermasse für Kabel eingesetzt wurden. Metallische Kabelkerne sorgen aber bekanntlich für Ableitung der Ladungen.

Die Wirkung des dem PE beigefügten Vinylacetates beim Bestrahlen ist vermutlich auf die CH₃-Gruppen der Acetatreste zurückzuführen, die für die Vernetzungsreaktionen bevorzugt werden, weil sie eine größere Beweglichkeit aufweisen, als die in der Kette vorhandenen CH- und CH₂-Gruppen. Somit werden im Vergleich zum Bestrahlen von reinem PE mehr Elektronen zur Radikalbildung benötigt und Ladungsansammlungen unterdrückt.

Es kann auch nicht ausgeschlossen werden, daß dielektrische Effekte, wie z. B. Umorientierung der vorhandenen permanenten Dipole der Acetatgruppen und damit Erhöhung des dielektrischen Verlustfaktors tan δ oder die Schaffung von Elektronenniveaus (Haftstellen) im PE durch das beigemischte Vinylacetat, wie auch eine Verbesserung der Gleichstromleiffähigkeit größere örtliche Ladungsansammlungen verhindern und zu einer sanften Entladung ohne Ausbildung des Lichtenberg'schen Kurzschlußeffektes führen.

Die Wirkung des Vinylacetates setzt etwa bei einem Gehalt von 0,3 Gew.-% an Vinylacetat, bezogen auf die Polyolefin-Formmasse ein. Darunter liegende Mengen mögen zwar auch noch eine geringe Verbesserung bringen ; diese ist jedoch so wenig ausgeprägt, daß sich die Mühe des Beismischens nicht lohnt.

Beimischungen über 20 Gew.-% an Vinylacetat, bezogen auf die Polyolefin-Formmasse, sind zwar auch denkbar. Hierdurch werden jedoch die Eigenschaften der Polyolefine eventuell in unerwünschter Weise beeinflußt, so daß höhere Beimischungen wirtschaftlich und technisch nicht sinnvoll erscheinen.

Es sei auch angemerkt, daß unter dem Begriff «Polyolefin-Formmassen» auch solche verstanden werden, die nicht zu 100 % aus Polyolefinen bestehen, sondern denen beispielsweise Antioxidantien, Stabilisatoren, Weichmacher und geringe Mengen an Füllstoffen beigefügt sind, wobei allerdings von Fall zu Fall Wechselwirkungen mit dem genannten Vinylacetat berücksichtigt werden müssen.

Die Erfindung soll anhand von Beispiel 1 und Vergleichsbeispielen 1 und 2 erläutert werden.

### Beispiel 1

Einem hochmolekularen PE hoher Dichte (Lupolen 4261 A der BASF) werden 0,9 Gew.-% an Vinylacetat zugefügt, und zwar in Form von 5 Gew.-% eines Ethylen-Vinylacetat-Copolymeren (Lupolen 3920 D der BASF), das mit 18 Gew.-% Vinylacetat versehen ist, wobei die beiden Lupolen-Arten ohne weiteres gemischt und extrudiert werden können. Die Pellets der beiden PE-Sorten werden mit 0,4 Gew.-% handelsüblichen Antioxidantien versehen, gemischt und bei 200 °C (± 10 °C) in üblicher Weise extrudiert.

Das Extrusionsprodukt ist ein Rohr mit einem Außendurchmesser von 18 mm und einer Wandstärke von 2 mm. An einer Preßplatte, hergestellt aus der genannten Mischung, wird eine Dielektrizitätszahl εᵣ = 2,6 und ein dielektrischer Verlustfaktor von tan δ bei 10⁶ Hz von 1,5 · 10⁻² gemessen.

Die Bestrahlung erfolgt mit einer Bestrahlungsintensität von 1,5 MeV und 50 mA. Die applizierte Dosis bei der Bestrahlung betrug etwa 15 Mrad.

Für das bestrahlte PE wurden folgende Werte gemessen : Gelfrakton nach DIN 16892 E : 79 % Aufschäumen wurde nicht beobachtet.

Lichtenberg'sche Kurzschluß-Figuren wurden nicht beobachtet.

### Vergleichsbeispiel 1

Rohre mit 18 mm Außendurchmessser und 2 mm Wanddicke aus hochmolekularem Polyethylen hoher Dichte (Lupolen 4261 A), siehe Beispiel, wurden ohne Beimischung von Vinylacetat, jedoch unter Beifügung von 0,4 Gew.-% Antioxidantien, im Extrusionsverfahren bei 210 °C hergestellt. An einer aus dieser Formmasse gefertigten Preßplatte wird eine Dielektrizitätszahl von εᵣ = 2,4 und ein dielektrischer Verlustfaktor tan δ bei 106 Hz von 2 · 10⁻⁴ gemessen.

Bei der Bestrahlung mit gleicher Strahlungsintensität wie in Beispiel 1 war die Gelfraktion nur 70 %. Dabei traten in Abständen von mehreren Metern Lichtenberg'sche Kurzschlüsse, d. h. feine Löcher im Rohr auf. Ein Aufschäumen, d. h. Bläschenbildung in der Rohrwand, wurde nicht beobachtet. Eine Gelfraktion von 79 %, wie im Beispiel 1, wurde erst bei einer wesentlich höheren Bestrahlungsdosis von 18 Mrad erreicht. Es trat kein Aufschäumen auf, jedoch wurden mehrere Lichtenberg'sche Kurzschlüsse pro Meter Rohrlänge festgestellt.

Die gegenübergestellten Beispiele zeigen, daß durch die Beifügung von Vinylacetat mit einem Anteil von nur 0,9 % der Lichtenberg'sche Kurzschluß vermieden werden kann und eine wesentliche Verminderung der Bestrahlungsdosis erreichbar ist. Zur Erzielung der gleichen Gelfraktion kann die Bestrahlungszeit erheblich verkürzt werden.

### Vergleichsbeispiel 2

Aus hochmolekularem PE hoher Dichte (Lupolen 4261 A) wurden unter Zumischung von 0,9 Gew.-% Vinylacetat (5 Gew.-% Evathene 538/539, Ethylen-Vinylacetat-Copolymer der ICI Chemicals) und 2 % Triallylcyanurat sowie 0,4 Gew.-% Antioxidans ein Rohr mit einem Außendurchmesser von 18 mm und einer Wanddicke von 2 mm im Extrusionsverfahren hergestellt. Anschließend wurde es bei einer Beschleunigerspannung von 1,5 MeV und einer Stromstärke von 50 mA bestrahlt. Die applizierte Dosis betrug 15 Mrad. Die Gelfraktion am bestrahlten Rohr wurde mit 89 % bestimmt. Es wurde kein Aufschäumen, jedoch zahlreiche Lichtenberg'sche Kurzschlüsse pro Meter Rohrlänge festgestellt. Die Anzahl der dadurch verursachten feinen Löcher in der Rohrwand war noch größer als bei der Bestrahlung von Rohren aus Polyethylen ohne Zusätze.

Dieses Beispiel läßt erkennen, daß die erfindungsgemäßen Vorteile der Verhinderung des Lichtenberg'schen Kurzschlußeffektes durch Zumischen von z. B. Vinylacetat bei Verwendung von weiteren, diesbezüglich ungeeigneten Zusätzen ins Gegenteil umgekehrt werden können.

## Patentansprüche

1. Verfahren zur Herstellung von Rohren aus durch Bestrahlen mit Elektronenstrahlen vernetzbaren Polyolefin-Formmassen, die kein Triallylcyanurat enthalten, denen vor der Bestrahlung wenigstens eine Substanz zugegeben wird, die das Auftreten von unerwünschten Ansammlungen und Entladungen elektrischer Ladungskonzentrationen verhindern und das unerwünschte Aufschäumen von Polyolefin-Formlingen während des Bestrahlens unterdrücken soll, dadurch gekennzeichnet, daß einer Polyolefin-Formmasse Ethylen-Vinylacetat-Copolymer beigemischt wird, bis daß die Polyolefin-Formmasse einen Gehalt von 0,3-20 Gew.-% an Vinylacetat aufweist, und daß anschließend in bekannter Weise die erhaltene Mischung in die gewünschte Form gebracht und die gebildeten Rohre mit Elektronenstrahlen bestrahlt werden.

## Claims

1. Process for producing tubes from polyolefin moulding compositions, said compositions not containing triallylcianurate and being cross-linkable by irradition with electron beams, which compositions prior to irradiation are admixed with at least one substance intended to prevent the occurence of undesirable accumulations and discharges of electrical charge concentrations and to suppress the undesirable foaming of polyolefin moulded articles during irradiation, characterized in that a polyolefin moulding composition is admixed with ethylene-vinylacetate copolymer until the polyolefin moulding composition has a content of from 0.3 to 20 per cent by weight of vinylacetate and that subsequently in a known manner the resulting mixture is brought into the desired shape and the formed tubes are irradiated with electron beams.

## Revendications

1. Procédé de fabrication de tubes à partir de matières à mouler de polyoléfines, ces polyoléfines non contenant des triallylcyanurates et étant réticulables par irradiation de faisceaux électroniques, auxquelles on a ajouté, avant l'irradiation, au moins une substance destinée à supprimer l'apparition d'accumulations et de décharges indésirables de concentration de charges électriques et le moussage indésirable des moulages des polyoléfines au cours de l'irradiation, charactérisé en ce que l'on mélange à une matière à mouler de polyoléfine un copolymère étylène-acétate de vinyle jusqu'à ce que la matière à mouler de polyoléfine ait une teneur en acétate de vinyle de 0.3 à 20 % en poids, et en amenant ensuite selon un procédé connu le mélange obtenu sous la forme désirée et en irradiant les tubes formés avec des faisceaux électroniques.
